# EUROPEAN PATENT APPLICATION

(11) **EP 1 698 766 A1**
(43) Date of publication of application: **06.09.2006**
(21) Application number: 05101670.7
(22) Date of filing: 04.03.2005
(51) Int. Cl.: F01N 3/08

(54) **Exhaust emission aftertreatment device for reducing nitrogen oxides (NOx) emissions of an internal combustion engine and method for controlling said device**

(71) Applicant: Ford Global Technologies, LLC, A subsidary of Ford Motor Company, Dearborn, MI 48126 (US)
(72) Inventor: Yacoub, Yasser Mohammed Sayed, 50858, Köln (DE)
(74) Representative: Drömer, Hans-Carsten

(57) **Abstract**

The present invention relates to an exhaust emission aftertreatment device (2) for reducing nitrogen oxides (NOₓ) emissions of an internal combustion engine (1), comprising at least a first NOₓ storage catalyst (3) and a second NOₓ storage catalyst (4), wherein both catalysts (3,4) are disposed in series in an exhaust pipe (7) which connects the two catalysts (3,4) with said combustion engine (1). Furthermore the invention relates to a method for controlling such a device (2).

It is an object of the present invention to provide an exhaust emission aftertreatment device (2) of the above mentioned kind, which enables an optimized de-sulfurization of the catalysts (3,4), namely a de-sulfurization of the under-floor catalyst (5) without damaging the close-coupled catalyst (6).

With respect to the object an exhaust emission aftertreatment device (2) is provided, which comprises at least a first NOₓ storage catalyst (3) and a second NOₓ storage catalyst (4), wherein both catalysts (3,4) are disposed in series in an exhaust pipe (7) which connects the two catalysts (3,4) with said combustion engine (1) and which is characterized in that
an exhaust gas guide mechanism (8) is disposed in the exhaust pipe (7) upstream the catalysts (3,4) in such a manner, that by switching the guide mechanism (8) between two operating positions either in a first operating position said first catalyst (3) is disposed upstream said second catalyst (4) or in a second operating position said second catalyst (4) is disposed upstream said first catalyst (3).

## Description

The present invention relates to an exhaust emission aftertreatment device for reducing nitrogen oxides (NOₓ) emissions of an internal combustion engine, comprising at least a first NOₓ storage catalyst and a second NOₓ storage catalyst, wherein both catalysts are disposed in series in an exhaust pipe which connects the two catalysts with said combustion engine.

Furthermore the invention relates to a method for controlling said device.

Internal combustion engines are provided with various types of aftertreatment devices for purifying exhaust gas generated by the combustion and emitted from combustion chambers into the exhaust pipe. For example, devices to filter and trapped the soot particulates contained in the exhaust gas. Within a regeneration phase the particulate filter is regenerated and the trapped particulates are burned by increasing the exhaust gas temperature. Instead of increasing the exhaust gas temperature additives could be added to the exhaust gas for promoting the combustion of the trapped particulates.

For reducing nitrogen oxides (NOₓ) emissions of an internal combustion engine a NOₓ storage catalyst could be disposed in the exhaust pipe. Such a catalyst is also known as NOₓ trap or lean NOₓ trap (abbreviated LNT - Lean NOₓ Trap).

A diesel lean NOₓ trap (LNT) absorbs and stores emissions of nitrogen oxides (NOₓ) during the lean operation of the internal combustion engine. When saturated with NOₓ molecules, a rich operation phase is required to purge the trap. This allows the release of the stored NOₓ molecules and its reduction into non-polluting components, mainly nitrogen (N₂), carbon dioxide (CO₂), and water vapour (H₂O). The frequency of this purging action is determined by the engine out NOₓ emissions and the storage capacity of the LNT which depends on the temperature of the exhaust gas.

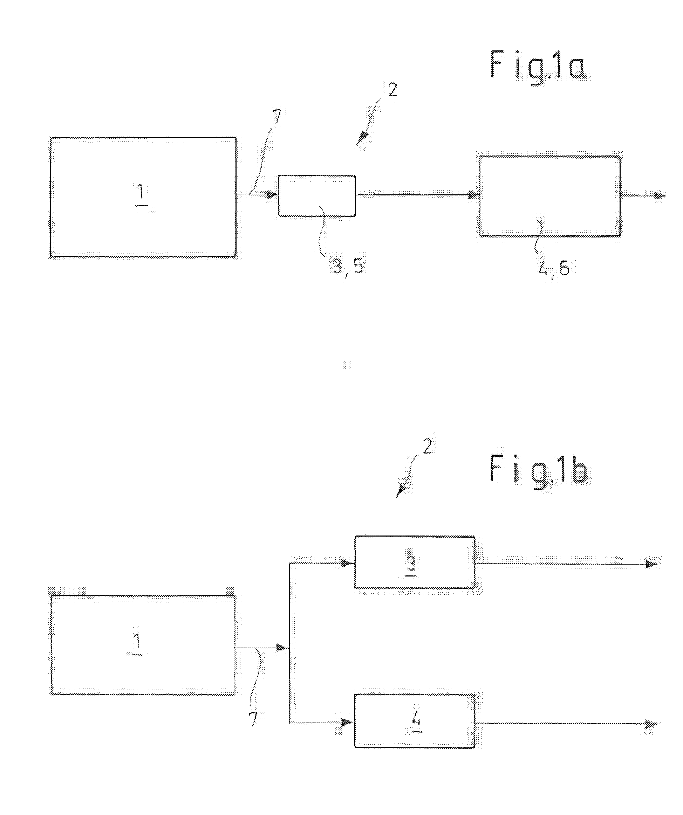

In order to achieve high conversion efficiency, multiple LNT bricks (3,4) are used whereby according to a first specific arrangement a close-coupled brick (5) is disposed in the exhaust gas pipe (7) near to the exhaust gas outlet of the combustion engine (1) and an under-floor brick (6) is disposed in the exhaust gas pipe (7) downstream the close-coupled brick i.e. catalyst (5). Such a conventional arrangement of two LNT catalysts (3,4) in series is shown in figure 1 a. Preferably the closed-coupled catalyst (5) is smaller in size than the under-floor catalyst (6). This allows NOₓ conversion under engine operation with low exhaust gas masses i.e. under low load and low speeds as well as in cold start conditions using the close-coupled LNT (5) and NOₓ conversion under engine operation with high exhaust gas masses i.e. at high load and high speeds using the under-floor LNT (6) which is bigger in size to accommodate high conversion at high space velocities under these operating conditions. The space velocity correlates to the exhaust gas mass passes through the exhaust gas piping (1).

Because of its close proximity to the engine exhaust gas outlet and its small size, the close-coupled catalyst will reach the temperature window for high conversion efficiency much faster than the under-floor catalyst. On the other hand, under high engine load, the closed-coupled LNT will suffer low conversion of NOₓ because of reaching higher temperatures than its optimal conversion temperature window and quite high space velocities because of its small size. Under high load conditions, the under-floor LNT will be within its optimal conversion window since the exhaust gas cools down in the exhaust gas piping. Moreover, the under-floor LNT is sized large enough to ensure lower space velocity and consequently proper conversion of NOₓ emissions under high emission rates (i.e. high exhaust gas masses). At the same time the storage capacity of the under-floor LNT is large enough to store high amounts of NOₓ under operation with high emission rates and therefore this high storage capacity keep the purging fuel consumption penalty caused by the purging of the trap within acceptable limits. Taking into account that the regeneration i.e purging of the LNT requires rich operation mode of the engine as mentioned above the purging frequency influences the fuel consumption and engine emissions directly.

A second arrangement using two NOₓ catalysts (3,4) for reducing nitrogen oxides (NOₓ) emissions is shown in figure 1b. The catalysts (3,4) are arranged in parallel. For example, the US 2004/0006977 A1 discloses such an arrangement. It is clear that such a system is expected to have a lower conversion efficiency as a system where both LNTs are placed in series (figure 1 a).

The sulfur contained in the exhaust gas results in another problem. In order to remove sulfur trapped in the LNT within a so-called de-sulfurization (deSOx) event the LNT needs to be heated to high temperatures, typically between 600 and 700 °C, and provided with a reducing gas, for example by running the engine in rich operation mode for a period of time. This event results in severe thermal aging of the LNT that dramatically reduces its lifetime and the conversion efficiency at end of its life.

The de-sulfurization of the catalysts is a major limitation of the conventional two LNT system described above wherein the catalysts are arranged in series because it is difficult to remove the sulfur trapped in the under-floor LNT without severely thermally aging and damaging the close-coupled LNT. This arises from the fact that in order to achieve the minimum temperature required to remove the sulfur trapped in the under-floor LNT, the closed-coupled LNT will reach temperature levels which may damage it.

With current technology, it is possible to achieve high conversion efficiency with multiple LNTs when using a closed-coupled and an under-floor LNT. However, the ability to remove the sulfur trapped in the under-floor LNT is quite limited since thermal aging may result in damaging the closed-coupled LNT.

With respect to this it is an object of the present invention to provide an exhaust emission aftertreatment device according to the preamble of claim 1, which overcomes the above described problems, in particular an aftertreatment device which enables an optimized de-sulfurization of the catalysts, namely a de-sulfurization of the under-floor LNT without damaging the close-coupled LNT.

Another object of the present invention is to provide a method for controlling such an aftertreatment device.

According to the present invention and with respect to the first object an exhaust emission aftertreatment device for reducing nitrogen oxides (NOₓ) emissions of an internal combustion engine is provided, comprising at least a first NOₓ storage catalyst and a second NOₓ storage catalyst, wherein both catalysts are disposed in series in an exhaust pipe which connects the two catalysts with said combustion engine, and which is characterized in that an exhaust gas guide mechanism is disposed in the exhaust pipe upstream the catalysts in such a manner, that by switching the guide mechanism between two operating positions either in a first operating position said first catalyst is disposed upstream said second catalyst or in a second operating position said second catalyst is disposed upstream said first catalyst.

The first operating position is characterized in that the guide mechanism guides the exhaust gas first to the first LNT catalyst and afterwards to the second LNT catalyst. The second operating position is characterized in that the guide mechanism guides the exhaust gas first to the second LNT catalyst and afterwards to the first LNT catalyst.

In contrast to the conventional arrangement of two catalysts in series wherein one LNT is unchangeable the close-coupled catalyst and the other LNT is unchangeable the under-floor LNT the inventive device enables to change the arrangement of the catalysts in an appropriate manner i.e. as required. That means a guide mechanism is used to determine which of the two LNTs is close-coupled and which LNT is used and arranged as under-floor LNT.

Consequently both catalysts could be arranged close to the engine and could be used as closed-coupled catalyst i.e. in a position which is preferred during de-sulfurization in order to achieve the required high temperatures. If a de-sulfurization has to be carried out the respective catalyst is arranged close to the engine by switching the guide mechanism in the appropriate required position. At the same time the other catalyst is used as under-floor catalyst disposed downstream the closed-coupled catalyst. Because of this during removing the sulfur in one LNT it is not to be feared that the other LNT is damaged by high exhaust gas temperatures.

A preferred embodiment of the aftertreatment device is characterized in that said catalysts are of the same size. This embodiment take sinto account that both catalysts could be used as close-coupled catalyst or as under-floor catalyst. Consequently it is not reasonable to provide the aftertreatment device with two catalysts of different sizes as known from the state of the art.

A preferred embodiment of the aftertreatment device is characterized in that an air/fuel ratio sensor for detecting the air/fuel ratio of the exhaust gas is disposed in said exhaust pipe upstream said catalysts. The air/fuel sensor is mainly used for controlling the air/fuel ratio of the exhaust gas and for comparing the actual ratio with the target air/fuel ratio. The air/fuel ratio is the basic information for controlling the function of the catalysts, in particular to control the different operation modes of the catalysts, namely the de-sulfurization process and the release and reduction of the before stored NOₓ molecules, when the catalyst is saturated with NOₓ molecules. The last mentioned process requires for example a rich operation mode of the internal combustion engine as described in detail above. Another possibility to provide a reduction agent, in particular additional fuel, is to inject the reduction agent directly in the exhaust pipe upstream the catalysts and not in the combustion chamber within a rich operation mode of the engine.

A preferred embodiment of the aftertreatment device is characterized in that a temperature sensor for detecting the temperature of the exhaust gas is disposed in said exhaust pipe upstream said catalysts. The temperature sensor is mainly used for controlling the temperature of the catalysts and to ensure that the present temperature is equal or lower than a permissible upper limit temperature. The target of the temperature control is to avoid thermal aging or damaging of the catalyst, which lowers conversion efficiency.

A preferred embodiment of the aftertreatment device is characterized in that said guide mechanism comprises a shutter, which opens or closes a feed line providing the respective catalyst with exhaust gas.

A preferred embodiment of the aftertreatment device is characterized in that said shutter is a bend flap, whereby a change from the first operating position to the second operating position is realized by a rotation of the flap.

Furthermore a method is provided for controlling an exhaust emission aftertreatment device according to any of the above described embodiments, which comprises the following steps:
(a) switching the guide mechanism into said first operating position so that said first catalyst is used as close-coupled catalyst and is disposed upstream said second catalyst in order to remove the sulfur trapped in said first catalyst, and
(b) switching the guide mechanism into said second operating position so that said second catalyst is used as close-coupled catalyst and is disposed upstream said first catalyst in order to remove the sulfur trapped in said second catalyst.

By switching the guide mechanism into said first operating position said first catalyst is used as close-coupled catalyst. Because of its close proximity to the engine the first catalyst will reach the preferred temperature window for de-sulfurization much faster than in the under-floor position. At the same time the second catalyst is used as under-floor catalyst, so that thermal aging and damaging of the second catalyst could be avoided during the de-sulfurization of the first catalyst is carried out.

By switching the guide mechanism into said second operating position said second catalyst is used as close-coupled catalyst. Because of its close proximity to the engine the second catalyst will reach the preferred temperature window for de-sulfurization much faster than in the under-floor position. At the same time the first catalyst is used as under-floor catalyst, so that thermal aging and damaging of the first catalyst could be avoided during the de-sulfurization of the second catalyst is carried out.

A preferred embodiment of the aftertreatment device is characterized in that
(a) a step less adjustable guide mechanism is used, in particular a continuously variable shutter or flap,
(b) disposing said guide mechanism in a middle position between said first and said second position in order to drive both catalysts as close-coupled catalysts, whereby the exhaust flow is divided up by the guide mechanism, so that a first partial exhaust gas flow passes said first catalyst and a second partial exhaust gas flow passes said second catalyst.

If a de-sulfurization is not required the aftertreatment device operates preferably with a guide mechanism in a middle position. This measure allows to drive both catalysts in the close-coupled position in order to increase the conversion efficiency. As pointed out before the main disadvantage of the under-floor catalyst consists in the fact, that the exhaust gas cools down in the exhaust pipe before reaching the under-floor catalyst, so that in the worst case the under-floor catalyst operates not within the preferred temperature window for NOₓ conversion.

Embodiments of the present invention will be described below with reference to the drawings:
- Figure 1 a: shows schematically a first conventional arrangement of two catalysts in series,
- Figure 1 b: shows schematically a second conventional arrangement of two catalysts in parallel,
- Figure 2a: shows schematically a first embodiment of the aftertreatment device in the first operating position,
- Figure 2b: shows schematically the first embodiment illustrated in figure 2a in the second operating position,
- Figure 3a: shows schematically a second embodiment of the aftertreatment device with a guide mechanism in a first operating position, and
- Figure 3b: shows schematically the second embodiment illustrated in figure 3a with a guide mechanism in a middle position.

Figures 1 a and 1 b are already described within the introduction in order to point out the known arrangements of the catalysts according to the state of the art and the problems resulting from this.

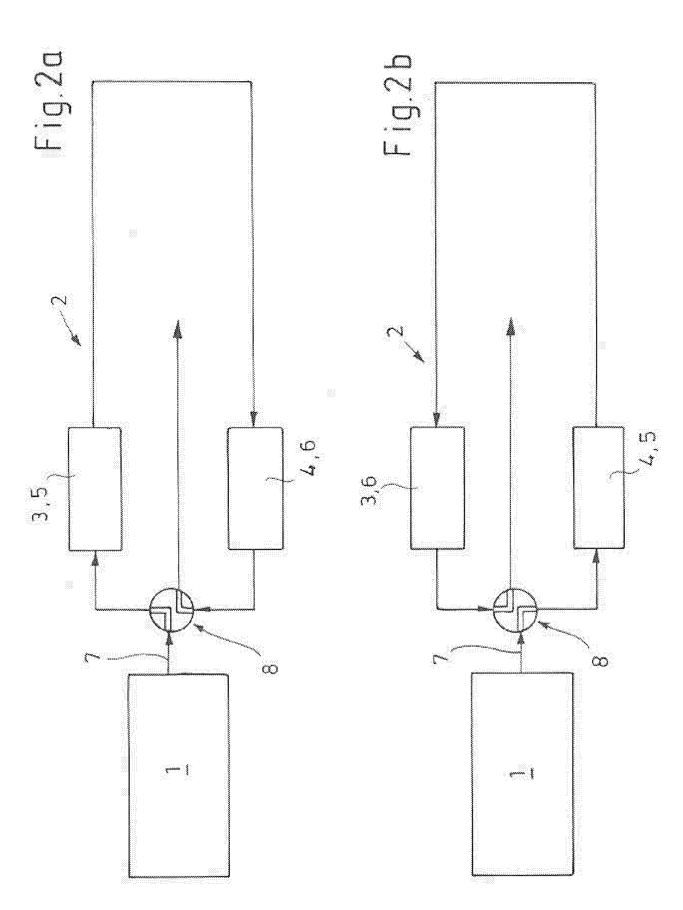

Figure 2a shows schematically a first embodiment of the aftertreatment device 2 in the first operating position.

The internal combustion engine 1 is equipped with an aftertreatment device 2 for reducing nitrogen oxides (NOₓ) emissions contained in the exhaust gas. The aftertreatment device 2 comprises a first NOₓ storage catalyst 3 and a second NOₓ storage catalyst 4. Both catalysts 3,4 are disposed in series in an exhaust pipe 7 which connects the two catalysts 3,4 with said combustion engine 1.

An exhaust gas guide mechanism 8 is disposed in the exhaust pipe 7 upstream the catalysts 3,4 in such a manner, that by switching the guide mechanism 8 between two operating positions either in a first operating position said first catalyst 3 is disposed upstream said second catalyst 4 or in a second operating position said second catalyst 4 is disposed upstream said first catalyst 3.

The first operating position illustrated in figure 2a is characterized in that the guide mechanism 8 guides the exhaust gas first to the first LNT catalyst 3 and afterwards to the second LNT catalyst 4 (indicated by arrows). Due to this the first catalyst 3 is used as close-coupled catalyst 5 and the second catalyst 4 is used as under-floor catalyst 6.

Figure 2b shows schematically the first embodiment illustrated in figure 2a in the second operating position. The second operating position is characterized in that the guide mechanism 8 guides the exhaust gas first to the second LNT catalyst 4 and afterwards to the first LNT catalyst 3 (indicated by arrows). In contrast to the first operating position the first catalyst 3 is used as under-floor catalyst 6 and the second catalyst 4 is used as close-coupled catalyst 5.

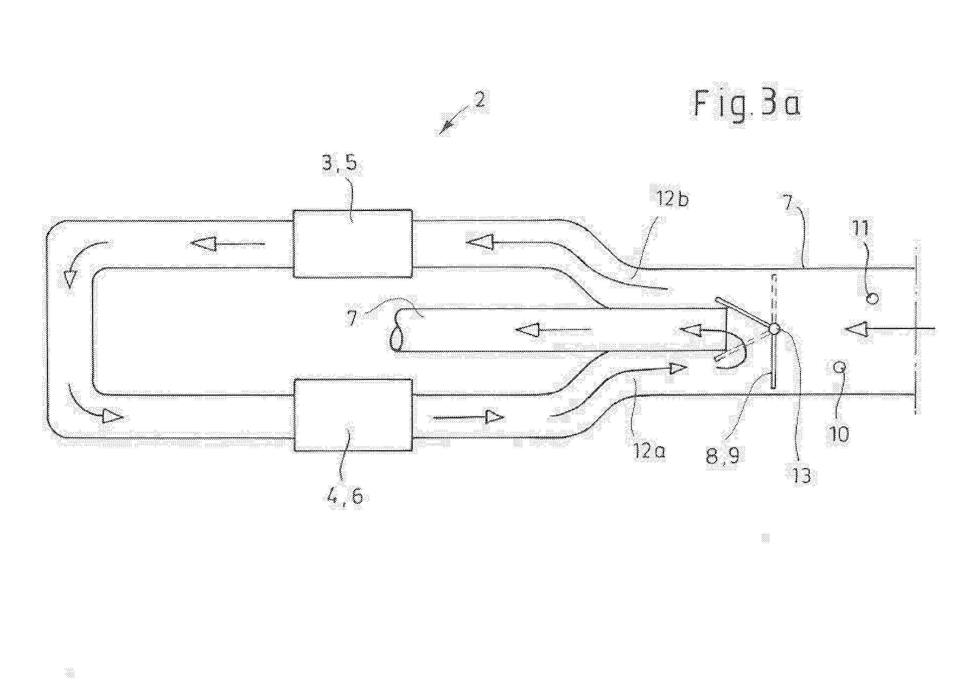

Figure 3a shows schematically a second embodiment of the aftertreatment device 2 with a guide mechanism 8 in a first operating position.

The illustrated aftertreatment device 2 is equipped with an air/fuel ratio sensor 10 for detecting the air/fuel ratio in the exhaust gas. The sensor 10 is disposed in the common exhaust pipe 7 upstream the catalysts 3,4. The air/fuel sensor 10 is used for controlling and for comparing the actual air/fuel ratio with a target air/fuel ratio, in particular to control engine operation, namely the rich operation mode and the lean operation mode of the engine.

Furthermore the aftertreatment device 2 is equipped with a temperature sensor 11 for detecting the temperature of the exhaust gas. The sensor 11 is disposed in the common exhaust pipe 7 upstream the catalysts 3,4. The temperature sensor 11 is used for controlling the temperature of the catalysts 3,4 and to ensure that the present temperature is equal or lower than a permissible upper limit temperature to avoid thermal aging or damaging of the catalysts 3,4. Furthermore the temperature sensor 11 is used within the de-sulfurazition in order to control if the temperature is within the required temperature window, typically between 600 and 700 °C.

As can be seen in figure 3a the guide mechanism 8 comprises a shutter in the shape of a bend flap 9, which opens or closes a feed line 12a, 12b for providing the respective catalyst 3,4 with exhaust gas.

The solid line shows the flap 9 in the first operation position in which the flap 9 guides the exhaust gas via a feed line 12b first to the first LNT catalyst 3 and afterwards to the second LNT catalyst 4 (indicated by arrows). Due to this the first catalyst 3 is used as close-coupled catalyst 5 and the second catalyst 4 is used as under-floor catalyst 6.

A change from the first operating position to the second operating position or reversed is realized by a rotation of the flap 9 around the axis 13.

The dashed line shows the flap 9 in the second operation position in which the flap 9 guides the exhaust gas via a feed line 12a first to the second LNT catalyst 4 and afterwards to the first LNT catalyst 3. Due to this the second catalyst 4 is used as close-coupled catalyst 5 and the first catalyst 3 is used as under-floor catalyst 6.

For the inlet and the outlet of the exhaust gas a common exhaust pipe 7 is used.

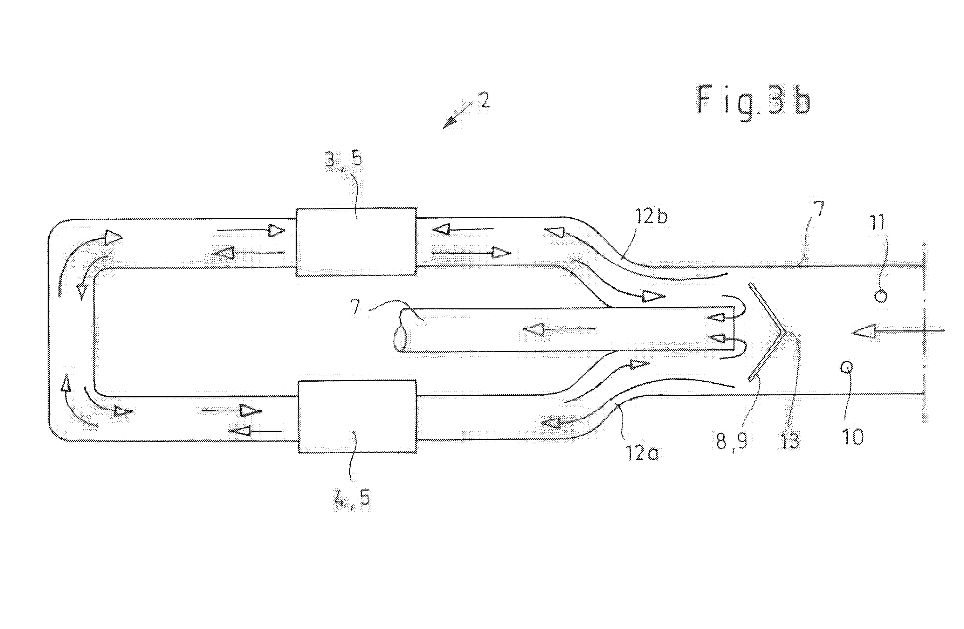

Figure 3b shows schematically the second embodiment illustrated in figure 3a with a guide mechanism 8 in a middle position. As mentioned above the aftertreatment device 2 operates preferably with a guide mechanism 8 in a middle position if a de-sulfurization is not required.

In fact both catalysts 3,4 are driven in the close-coupled position in order to increase the conversion efficiency. The high temperature due to the proximity of the engine promotes NOₓ conversion. The middle position could be static or realized by fluttering of the flap 9.

### Reference signs

- 1: internal combustion engine
- 2: aftertreatment device
- 3: first catalyst
- 4: second catalyst
- 5: close-coupled catalyst
- 6: under-floor catalyst
- 7: exhaust pipe
- 8: guide mechanism
- 9: flap
- 10: air/fuel ratio sensor
- 11: temperature sensor
- 12a: feed line
- 12b: feed line
- 13: axis

## Claims

1. An exhaust emission aftertreatment device (2) for reducing nitrogen oxides (NOₓ) emissions of an internal combustion engine (1), comprising at least a first NOₓ storage catalyst (3) and a second NOₓ storage catalyst (4), wherein both catalysts (3,4) are disposed in series in an exhaust pipe (7) which connects the two catalysts (3,4) with said combustion engine (1),
**characterized in that**
an exhaust gas guide mechanism (8) is disposed in the exhaust pipe (7) upstream the catalysts (3,4) in such a manner, that by switching the guide mechanism (8) between two operating positions either in a first operating position said first catalyst (3) is disposed upstream said second catalyst (4) or in a second operating position said second catalyst (4) is disposed upstream said first catalyst (3).

2. An exhaust emission aftertreatment device (2) according to claim 1,
**characterized in that**
said catalysts (3,4) are of the same size.

3. An exhaust emission aftertreatment device (2) according to any of the preceding claims,
**characterized in that**
an air/fuel ratio sensor (10) for detecting the air/fuel ratio of the exhaust gas is disposed in said exhaust pipe (7) upstream said catalysts (3,4).

4. An exhaust emission aftertreatment device (2) according to any of the preceding claims,
**characterized in that**
a temperature sensor (11) for detecting the temperature of the exhaust gas is disposed in said exhaust pipe (7) upstream said catalysts (3,4).

5. An exhaust emission aftertreatment device (2) according to any of the preceding claims,
**characterized in that**
said guide mechanism (8) comprises a shutter, which opens or closes a feed line providing the respective catalyst (3,4) with exhaust gas.

6. An exhaust emission aftertreatment device (2) according to claim 5,
**characterized in that**
said shutter is a bend flap (9), whereby a change from the first operating position to the second operating position is realized by a rotation of the flap (9).

7. A method for controlling an exhaust emission aftertreatment device (2) according to any of the preceding claims, which comprises the following steps
(a) switching the guide mechanism (8) into said first operating position so that said first catalyst (3) is used as close-coupled catalyst (5) and is disposed upstream said second catalyst (4) in order to remove the sulfur trapped in said first catalyst (3), and
(b) switching the guide mechanism (8) into said second operating position so that said second catalyst (4) is used as close-coupled catalyst (3) and is disposed upstream said first catalyst (3) in order to remove the sulfur trapped in said second catalyst (4).

8. A method according to claim 7, **characterized in that**
(a) a step less adjustable guide mechanism (8) is used, in particular a continuously variable shutter or flap (9),
(b) disposing said guide mechanism (8) in a middle position between said first and said second position in order to drive both catalysts (3,4) as close-coupled catalysts (5), whereby the exhaust flow is divided up by the guide mechanism (8), so that a first partial exhaust gas flow passes said first catalyst (3) and a second partial exhaust gas flow passes said second catalyst (4).
